(19) Europäisches Patentamt
European Patent Office
Office européen des brevets

(11) **EP 2 075 535 A2**

(12) **EUROPEAN PATENT APPLICATION**

(43) Date of publication:
**01.07.2009 Bulletin 2009/27**

(51) Int Cl.:
**G01C 19/72** (2006.01) **G02B 6/44** (2006.01)

(21) Application number: **08165324.8**

(22) Date of filing: **26.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 US 948795**

(71) Applicant: **Honeywell International Inc.**
**Morristown, NJ 07962 (US)**

(72) Inventors:
• **Sardinha, Mike**
  **Morristown, NJ 07962 (US)**

• **Rivera, Joseph**
  **Morristown, NJ 07962 (US)**
• **Kaliszek, Andrew**
  **Morristown, NJ 07962 (US)**
• **Kopacz, Stainslaw**
  **Morristown, NJ 07962 (US)**

(74) Representative: **Buckley, Guy Julian**
**Patent Outsourcing Limited**
**1 King Street**
**Bakewell**
**Derbyshire DE45 1DZ (GB)**

(54) **Octupole winding pattern for a fiber optic coil**

(57) An octupole winding pattern for winding a fiber optic coil includes at least two layers of an eight-layer winding pattern having an end fiber optic coil diameter formed in an opposite direction as a substantial portion of a remaining portion of the respective layer. The selectively arranged octupole winding pattern may be used in a fiber optic gyroscope. A spool onto which the fiber optic coil is wound may be removable. Preferably, the octupole winding pattern is advantageously arranged to provide a substantial amount of optical symmetry with respect to a winding centerline of the fiber optic coil. In addition, the octupole winding pattern provides a substantial amount of geometric, mechanical, and thermal symmetry.

**FIG.1**

# Description

## GOVERNMENT RIGHTS

The United States Government has acquired certain rights in this invention pursuant to Contract No. FA9453-06-C-0097 issued by the United States Air Force.

## BACKGROUND OF THE INVENTION

An interferometric fiber optic gyroscope typically includes a single mode, continuous fiber optic coil formed in a conventional octupole pattern such that light is guided through the coil to manifest the Sagnac effect. A conventional octupole pattern for winding a fiber optic coil is appreciated as a winding pattern where the pattern repeats itself every eight (8) layers. Conventional octupole winding patterns are generally known in the gyroscopic arts and are further known to place at least some amount of stress on the fiber optic coil in various regions of the pattern.

The Sagnac effect is generally understand to be when two counter propagating light beams, one traveling clockwise (CW) and the other traveling counterclockwise (CCW) and both generated from the same source, propagate inside an interferometer along the same closed path. At the output of the interferometer the CW and CCW light beams interfere to produce a fringe pattern which shifts if a rotation rate is applied along an axis perpendicular to the plane of the path of the light beam. Thus, the CW and CCW light beams experience a relative phase difference which is proportional to a rotation rate of the fiber optic gyroscope. And, since the fiber optic gyroscope is generally fixed to the same reference frame as a vehicle (e.g., airplane, helicopter, space, or other similar vehicle) in which it is located, the relative phase difference of the CW and CCW light beams is also proportional to a rotation rate of the vehicle.

The optical fibers used in the fiber optic gyroscope are typically thin, long cylindrical structures which support light propagation through total internal reflection. Generally, the optical fiber consists of an inner core and an outer cladding typically made of silica glass, although, other materials like plastics are some times used.

The accuracy of the fiber optic gyroscope may be affected by environmentally-induced factors in the fiber optic coil and generally manifested due to asymmetries associated with a desired optical, mechanical, geometric and/or thermal symmetry of the fiber optic coil. These factors or asymmetries, as well as others, may cause a refractive index change and thus affect the counter-propagating waves. Consequently, one result of the environmentally-induced factors and/or asymmetries is that a differential phase shift will occur that inaccurately mimics a sensed rotation of the fiber optic gyroscope. It is further appreciated that geometric asymmetries, mechanically and/or thermally-induced stresses may correspond to or generate an optical asymmetry with respect to a length of the fiber optic coil.

When winding the fiber optic coil in the conventional octupole pattern, the need arises at least once within every eight layers to squeeze or urge a full diameter of the fiber optic coil into a half diameter space that is located between an end portion of a formed layer and a flange of a spool onto which the fiber optic coil is being formed. One drawback of the conventional octupole pattern is that urging the full diameter of the fiber optic coil into the half diameter space may cause a hump or bulge to form in the wound fiber optic coil. Correspondingly, the hump or bulge may often result in both geometric and mechanical asymmetries, which may reduce the performance and/or accuracy of the fiber optic gyroscope.

## BRIEF SUMMARY OF THE INVENTION

The present invention, according to at least one embodiment, generally relates to an octupole winding pattern for winding a fiber optic coil, where the wound fiber optic coil may be used in a fiber optic gyroscope. In a preferred embodiment, the octupole winding pattern includes eight layers of the fiber optic cable wound on a removable spool and where the layers are arranged to provide a substantial amount of optical symmetry with respect to the fiber optic coil and preferably retain a substantial amount of geometric and mechanical symmetry with regard to the octupole winding pattern.

In one aspect of the invention, a method for winding a fiber optic coil according to an octupole winding pattern that includes at least eight layers of the coil formed on a spool includes forming a substantial portion of a third layer of the octupole winding pattern by winding the fiber optic coil in a first direction around the spool to form the substantial portion of the third layer, wherein the third layer includes successive fiber optic coil diameters placed adjacent one another; continuing to form the third layer of the octupole winding pattern by winding the fiber optic coil in a second direction around the spool to place at least one coil diameter, as viewed in cross section, adjacent to the substantial portion of the third layer such that the third layer includes successively arranged fiber optic coil diameters wound in the first direction and at least one fiber optic coil diameter wound in the second direction; forming a substantial portion of a seventh layer of the octupole winding pattern by winding the fiber optic coil in the second direction around a previously formed layer to form the substantial portion of the seventh layer, wherein the seventh layer includes successive fiber optic coil diameters placed adjacent one another; and continuing to form the seventh layer of the octupole winding pattern by winding the fiber optic coil in the first direction around the previously formed layer to place at least one coil diameter adjacent to the substantial portion of the seventh layer such that the seventh layer includes successively arranged fiber optic coil diameters wound in the second direction and at least one fiber optic coil diameter wound in the first direction.

In another aspect of the invention, a continuous fiber optical coil wound in an octupole pattern on a spool includes a substantial portion of a third layer wound in a first direction around the spool, wherein the third layer includes successive fiber optic coil diameters placed adjacent one another, at least one fiber optic coil diameter wound in a second direction at an end portion of the third layer and located adjacent to one of the fiber optical coil diameters of the substantial portion of the third layer; and a substantial portion of a seventh layer wound in a second direction around the spool, wherein the seventh layer includes successive fiber optic coil diameters placed adjacent one another, at least one fiber optic coil diameter wound in a first direction at an end portion of the seventh ayer and located adjacent to one of the fiber optical coil diameters of the substantial portion of the seventh layer.

## BRIEF DESCRIPTION OF THE DRAWINGS

Preferred and alternative embodiments of the present invention are described in detail below with reference to the following drawings:

FIGURE 1 is a schematic view of a continuous fiber optic coil for describing how to achieve a sufficient amount of optical symmetry with respect to various portions of the fiber optical coil;

FIGURE 2 is a cross-sectional view of a prior-art, conventional multi-octupole winding pattern; and

FIGURE 3 is a cross-sectional view of a multi-octupole winding pattern having at least one fiber optic coil diameter selectively directed in an opposite direction with respect to a remaining portion of its respective layer according to an illustrated embodiment of the invention.

## DETAILED DESCRIPTION OF THE PREFERRED EMBODIMENT

In the following description, certain specific details are set forth in order to provide a thorough understanding of various embodiments of the invention. However, one skilled in the art will understand that the invention may be practiced without these details or with various combinations of these details. In other instances, well-known structures and methods associated with fiber optic gyroscopes, fiber optic coils, fiber optic coils arranged in an octupole pattern and integrated circuit (IC) chips, to include the manufacturing and/or assembly thereof may not be shown or described in detail to avoid unnecessarily obscuring descriptions of the embodiments of the invention.

The following description is generally directed to an octupole pattern for a fiber optic coil, for example a fiber optic coil that may be used in a fiber optic gyroscope. Preferably, the octupole pattern substantially reduces asymmetries in sections of the fiber optic coil that may have an effect on the bias performance of the fiber optic gyroscope. The bias performance may be otherwise referred to as a bias error, which may include a time derivative of temperature (Tdot) error and/or a mechanical strain error. Thermal asymmetries, geometric asymmetries, mechanical asymmetries, or some combination thereof, when induced, may contribute to a reduction in the bias performance, or alternatively an increase in the bias error. To increase the bias performance or alternatively reduce the bias error, it is an objective of the present invention to arrange the octupole winding pattern such that the fiber optic coil, after winding, has sufficient optical symmetry.

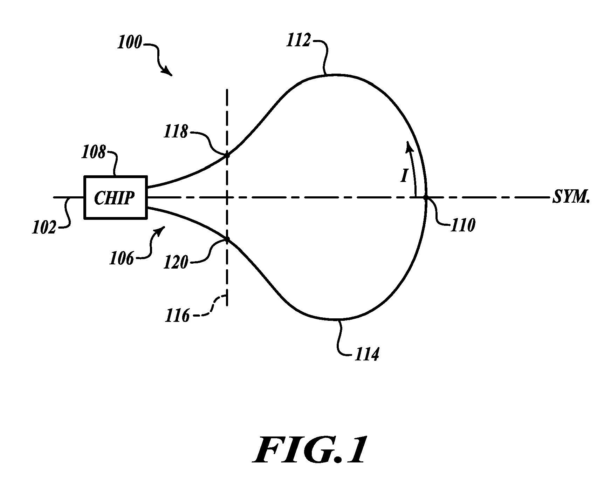

Sufficient optical symmetry of the fiber optic coil occurs when like portions of the coil that are equidistant from each other are subjected to substantially similar if not identical stresses, strains, thermal fluctuations, *etc.* as a function of time and/or as a function of a length of the coil. Optical symmetry is best appreciated by referring to FIGURE 1, which schematically shows a continuous fiber optic coil 100 arranged about a geometric or coil symmetry axis 102. For explanatory and clarity purposes only, the fiber optic coil 100 is not illustrated as being wound or otherwise configured to be installed into a fiber optic gyroscope. Thus, FIGURE 1 is merely provided to describe the symmetric and/or asymmetric concepts related to the fiber optic coil 100. As noted previously, optical symmetry may be interrelated to geometric, mechanical, and/or thermal symmetry of the fiber optic coil. A first end 104 and a second end 106 of the fiber optic coil are coupled to a chip 108. Mathematically, a geometrical, mechanical, thermal, and optical symmetry of the fiber optic coil 100 may be provided as follows:

1. Geometric symmetry $l_k = - l_k = L$ - coil length
2. Optical symmetry $\gamma[l,T(t)] = \gamma[-l,T(t)]$ and $n (l) = n (-l)$

3. Mechanical symmetry $\alpha_e[l,T(t)] = \alpha_e[-l,T(t)]$ or

$$\frac{\partial \varepsilon[l,T(t)]}{\partial t} = \frac{\partial \varepsilon[-l,T(t)]}{\partial t}$$

4. Thermal symmetry $T (l,t) = T(-l,t)$

FIGURE 1 schematically shows that a geometric center 110 of the fiber optic coil 100 is a middle point of the coil 100, such that the coil 100 includes an upper length 112 and a lower length 114 that each extend lengthwise equally from the middle point. By following the lengths 112, 114 of the coil 100 along the coil symmetry axis 102, it may be envisioned that at any vertical plane, which is illustrated by vertical line 116, some aspect of the fiber optic coil 100 at an upper intersection point 118 may be geometrically, mechanically, and/or thermally asymmetric with respect to lower intersection point 120. An example of a geometric asymmetry could be a slight kink or bend in the length 112 that is not symmetrically mirrored in the length 114 of the coil 100. An example of a mechanical asymmetry could be an amount of stress or strain either applied to or residually built-up in the length 112, but again not symmetrically mirrored in the length 114, due to a compression or torsional force on that portion of the coil 100. An example of a temperature asymmetry could be when a temperature gradient along the lengths 112, 114 is not linearly uniform and/or when a temperature of the coil 100 at the upper intersection point 118 is different than a temperature of the coil 100 at the lower intersection point 120. Often times, the various asymmetries may be interrelated or interdependent, for example a temperature asymmetry as described above may lead to different rates of thermal expansion or contraction and in turn induce a mechanical strain in the coil lengths 112, 114.

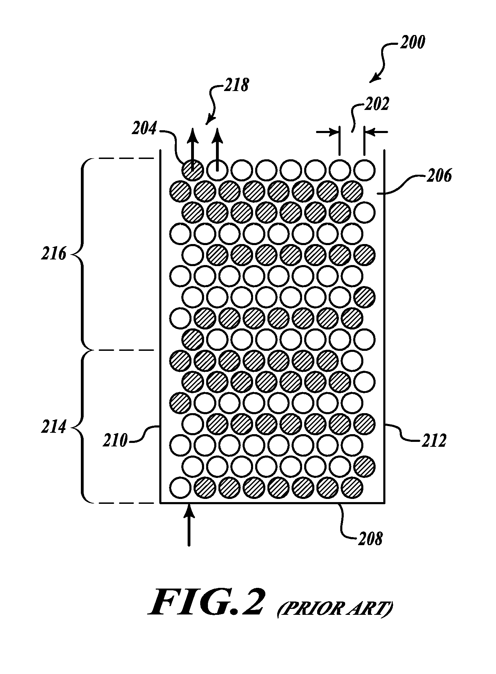

FIGURE 2 shows a prior art, conventional multi-octupole winding pattern 200 in which a at least once every eight (8) layers a full fiber diameter 202 of coil 204 is squeezed or urged into and past a half fiber diameter space 206. The coil 204 is wound on a spool 208 having flanges 210, 212. In the illustrated pattern 200, a first octupole pattern 214 includes a first eight layers of wound coil 204 and a second octupole pattern 216 includes a second eight layers of wound coil 204. Depending on the total length of the coil 204, the octupole pattern 214 may be repeated as necessary. For example, the spool 208 may have one, two, four, eight or more repeated octupole patterns. Thus, an octupole pattern repeated eight times would result in sixty-four layers of coil 204.

For purposes of clarity, the octupole patterns 214, 216 are illustrated in cross-section as either a solid black circle or as a white, outlined circle. The purpose of showing the solid black and white, outlined circles is because the conventional octupole winding pattern 200 includes octupole patterns 214, 216 that are formed using coil 204 from two separate feeder spools (not shown). For example, a first feeder spool provides the coil 204 denoted by the solid black circles and a second feeder spool provides the coil 204 denoted by the white, outlined circles. In practice, the coil 204 is a continuous fiber optic coil loaded onto the two feeder spools, and where the first feeder spool directs the coil 204 in a clockwise (CW) direction while the second feeder spool directs the coil 204 in a counterclockwise (CCW) direction, or vice-versa.

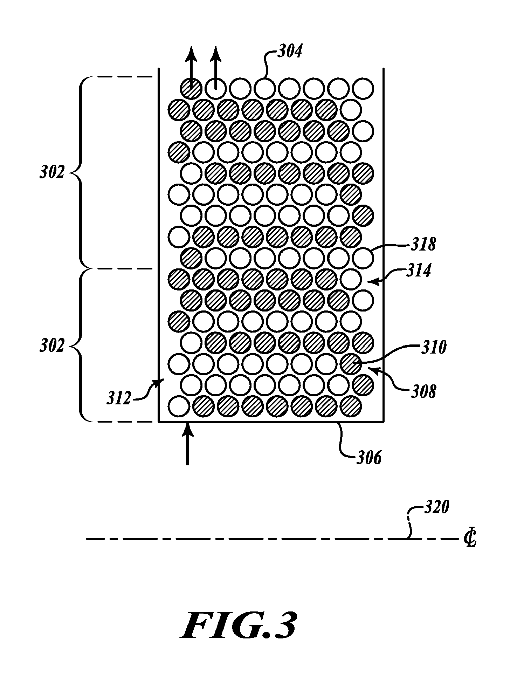

FIGURE 3 shows a multi-octupole winding pattern 300 according to an illustrated embodiment of the invention. The multi-octupole winding pattern 300 includes at least two octupole patterns 302 of a fiber optic coil 304, each pattern 302 having at least eight layers formed on a removable spool 306. For purposes of clarity and brevity, only the layers where changes have been made relative to the conventional octupole winding pattern 200, described above, will be described in detail herein. In the illustrated embodiment, the coil 304 is a continuous fiber optic coil loaded onto the two feeder spools (not shown), and where the first feeder spool directs the coil 304 in the CW direction while the second feeder spool directs the coil 304 in the CW direction, or vice-versa. The first feeder spool provides the coil 304 denoted by the solid black circles and a second feeder spool provides the coil 304 denoted by the white, outlined circles, or vice-versa.

Referring to a third layer 308 of the octupole pattern 302, the third layer 308 includes at least one coil diameter 310 provided by the first feeder spool arranged adjacent to a remaining portion of the third layer 308 comprising a plurality of coil diameters 312 provided by the second feeder spool. A seventh layer 314 includes at least one coil diameter 316 provided by the second feeder spool arranged adjacent to a remaining portion of the seventh layer 314 and having a plurality of coil diameters 318 provided by the first feeder spool. Alternatively stated, the third layer 308 and the seventh layer 314 are arranged opposite to one another with respect to the coil 304 drawn from the first and second feeder spools. The routing of the fiber coil 304 at the ends of the third layer 308 and the seventh layer 314 provides for a more efficient layer-to-layer transition and reduces and even may eliminate compression of the cladding of the fiber optic coil 304. In addition, the octupole winding pattern 300 provides a desired amount of optical symmetry, which in turn reduces an accumulation of residual asymmetric errors or irregularities that are present with the conventional octupole winding pattern 200.

Preferably, the multi-octupole winding pattern 300 includes at least two octupole patterns 302, in which one pattern is stacked on top of a base pattern. This arrangement advantageously provides a reverse symmetry of the overall winding pattern 300 and further operates to reduce the accumulation of any residual asymmetric errors or irregularities In addition, the multi-octupole winding pattern 300 operates to reduce or eliminate time-varying thermal or mechanical strain gradients with respect to a coil winding centerline 320. As a result of the multi-octupole winding pattern 300, an undesired or unwanted phase shift that may affect the optical path lengths between the two counter-propagating waves is much less likely to occur, and thus undesired rotation measurements will not be detected by the fiber optic gyroscope in which the multi-octupole pattern 300 is installed.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

**Claims**

1. A method for winding a fiber optic coil according to an octupole winding pattern that includes at least eight layers of the coil formed on a spool, the method comprising:

forming a substantial portion of a third layer of the octupole winding pattern by winding the fiber optic coil in a first direction around the spool to form the substantial portion of the third layer, wherein the third layer includes successive fiber optic coil diameters placed adjacent one another;

continuing to form the third layer of the octupole winding pattern by winding the fiber optic coil in a second direction around the spool to place at least one coil diameter adjacent to the substantial portion of the third layer such that the third layer includes successively arranged fiber optic coil diameters wound in the first direction and at least one fiber optic coil diameter wound in the second direction;

forming a substantial portion of a seventh layer of the octupole winding pattern by winding the fiber optic coil in the second direction around a previously formed layer to form the substantial portion of the seventh layer, wherein the seventh layer includes successive fiber optic coil diameters placed adjacent one another;

continuing to form the seventh layer of the octupole winding pattern by winding the fiber optic coil in the first direction around the previously formed layer to place at least one coil diameter adjacent to the substantial portion of the seventh layer such that the seventh layer includes successively arranged fiber optic coil diameters wound in the second direction and at least one fiber optic coil diameter wound in the first direction.

2. The method of Claim 1, wherein the octupole winding pattern includes an amount of optical symmetry.

3. The method of Claim 2, wherein the optical symmetry reduces an error-induced reading associated with a phase shift with respect to light waves propagating through the fiber optical coil.

4. The method of Claim 1, wherein the substantial portion of the third layer of the octupole winding pattern includes at least seven fiber optic coil diameters wound in the first direction.

5. A continuous fiber optical coil wound in an octupole pattern on a spool, the coil comprising:

a substantial portion of a third layer wound in a first direction around the spool, wherein the third layer includes successive fiber optic coil diameters placed adjacent one another, at least one fiber optic coil diameter wound in a second direction at an end portion of the third layer and located adjacent to one of the fiber optical coil diameters of the substantial portion of the third layer; and

a substantial portion of a seventh layer wound in a second direction around the spool, wherein the seventh layer includes successive fiber optic coil diameters placed adjacent one another, at least one fiber optic coil diameter wound in the first direction at an end portion of the seventh layer and located adjacent to one of the fiber optical coil diameters of the substantial portion of the seventh layer.

6. The fiber optic coil of Claim 5, wherein the substantial portion of the third layer of the octupole winding pattern includes at least seven fiber optic coil diameters wound in the first direction.

7. A fiber optical gyroscope comprising:

a removable spool;
a fiber optic coil wound in an octupole pattern on the removable spool, the fiber optic coil including at least eight layers of coil, wherein a substantial portion of a third layer is wound in a first direction, the third layer includes successive fiber optic coil diameters placed adjacent one another, at least one fiber optic coil diameter wound in a second direction at an end portion of the third layer and located adjacent to one of the fiber optical coil diameters of the substantial portion of the third layer, and further wherein a substantial portion of a seventh layer is wound in a second direction, the seventh layer includes successive fiber optic coil diameters placed adjacent one another, at least one fiber optic coil diameter wound in the first direction at an end portion of the seventh layer and located adjacent to one of the fiber optical coil diameters of the substantial portion of the seventh layer.

8. The fiber optic gyroscope of Claim 7, wherein the fiber optic coil is a continuous fiber optic coil.

9. The fiber optic gyroscope of Claim 7, wherein the octupole winding pattern includes an amount of optical symmetry.

10. The fiber optic gyroscope of Claim 9, wherein the optical symmetry reduces an error-induced reading associated with a phase shift with respect to light waves propagating through the fiber optical coil.

**FIG.1**

**FIG.2** *(PRIOR ART)*

**FIG.3**